(19) Europäisches Patentamt
European Patent Office
Office européen des brevets

(11) Veröffentlichungsnummer: **0 312 733 B1**

# (12) EUROPÄISCHE PATENTSCHRIFT

(45) Veröffentlichungstag der Patentschrift: **06.05.92**

(51) Int. Cl.$^5$: **C09D 167/06**, C09D 5/02

(21) Anmeldenummer: **88113734.3**

(22) Anmeldetag: **24.08.88**

## (54) Verwendung einer wässrigen Emulsion oxidativ trocknender polyethylenglykolmodifizierter Alkydharze als unter Druck stehende Aerosolanstrichzusammensetzung.

(30) Priorität: **27.08.87 DE 3728597**

(43) Veröffentlichungstag der Anmeldung:
**26.04.89 Patentblatt 89/17**

(45) Bekanntmachung des Hinweises auf die Patenterteilung:
**06.05.92 Patentblatt 92/19**

(84) Benannte Vertragsstaaten:
**AT BE CH DE ES FR GB GR IT LI NL SE**

(56) Entgegenhaltungen:
**EP-A- 0 066 197**
**FR-A- 2 190 886**
**US-A- 3 077 459**
**AT-B- 377 990**
**GB-A- 2 084 165**
**US-A- 3 984 364**

(73) Patentinhaber: **Herberts Gesellschaft mit beschränkter Haftung**
**Christbusch 25**
**W-5600 Wuppertal 2(DE)**

Patentinhaber: **Peter Kwasny KG chemisch-technische Erzeugnisse**
**Heilbronner Strasse 96**
**W-6953 Gundelsheim(DE)**

(72) Erfinder: **Stephan, Werner**
**Westfalenweg 169**
**W-5600 Wuppertal 1(DE)**
Erfinder: **Surrey, Bruno**
**Markland 156**
**W-5600 Wuppertal 2(DE)**
Erfinder: **Kwasny, Peter**
**Rheinweg 39**
**CH-8200 Schaffhausen(CH)**
Erfinder: **Augscheller, Günter**
**Breslauer Strasse 12**
**W-6953 Gundelsheim(DE)**

(74) Vertreter: **Türk, Gille, Hrabal**
**Brucknerstrasse 20**
**W-4000 Düsseldorf 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.08/2.18/2.0)

## Beschreibung

Die Erfindung betrifft die Verwendung einer wäßrigen Emulsion trocknender acrylisch- bzw. polyethylenmodifizierter Alkydharze in Aerosolanstrichzusammensetzungen, die sich zusammen mit einem Treibmittel in einer Aerosol-sprüh-einrichtung, insbesondere einer Aerosol-Sprühdose befinden.

Aerosolanstrichuzusammensetzungen unterVerwendung flüchtiger organischer Lösemittel als Träger für die filmbildenden Bindemittel sind seit langem bekannt. Aufgrund des Lösemittelgehalts sind derartige Zusammensetzungen toxisch, feuergefährlich und umweltschädigend.

Es wurde auch schon der Versuch gemacht, Aerosolzusammensetzungen auf wäßriger Basis bereitzustellen, jedoch waren derartige Versuche bisher wenig erfolgreich, da entweder schäumende Zusammensetzungen erhalten wurden, oder die Bindemittel beim Aufdrücken der Treibmittel aus der wäßrigen Dispersion oder Lösung ausgefällt wurden.

Um diese Probleme zu überwinden beschreibt die DE-PS 29 47 999 eine unter Druck stehende Aerosolanstrichzusammensetzung, die filmbildende Acrylpolymere in Teilchenform mit mindestens einem alipathischen einwertigen Alkohol umfaßt. Nach der DE-PS 31 38 298 sind für wäßrige Aerosolanstrichmittel filmbildende wasserlösliche Polymere nötig, die eine einphasige Trägerzusammensetzung aus 20 bis 75 Gew.-% Dimethylether, 10 bis 50 Gew.-% Wasser und 0,1 bis 45 Gew.-% eines polaren wasserlöslichen Lösemittels enthalten.

Es hat sich jedoch gezeigt, daß es praktisch nicht möglich ist, beliebige wasserverdünnbare Bindemittel in Form wäßriger Emulsionen für Aerosolsprühzwecke einzusetzen. So zeigten Versuche mit handelsüblichen wasserverdünnbaren Polyurethandispersionen, handelsüblichen wasserverdünnbaren oxidativ trocknenden Alkydharzen, Bindemitteln auf Basis von Styrol/Butadien/ungesättigte Carbonsäuren, sowie Acrylatdispersionen nur Mißerfolge, da die zugrundeliegenden Bindemittel beim Aufdrücken der Treibmittel koagulierten.

Aufgabe der Erfindung ist daher die Bereitstellung von wäßrigen Emulsionen, die als Aerosolzusammensetzungen für den Sprühauftrag, insbesondere aus Sprühdosen geeignet sind, die sich vom Stand der Technik dadurch unterscheiden, daß keine Lösungen oder Suspensionen von Polymeren in Teilchenform vorliegen müssen und demnach ohne Schäumen oder Ausflockungen kontinuierliche lufttrocknende Filme ergeben.

Überraschenderweise hat es sich gezeigt, daß diese Aufgabe gelöst werden kann, wenn wäßrige Emulsionen verwendet werden, wie sie anspruchsgemäß definiert werden.

Bei den erfindungsgemäß verwendeten wäßrigen Emulsionen handelt es sich um solche auf der Basis acrylatmodifizierter Alkydharze. Derartige acrylatmodifizierte Alkydharze werden z.B. in der AT-PS 377 990 beschrieben.

Die Emulsionen werden dadurch hergestellt, daß man

(I) 25 bis 50, vorzugsweise 30 bis 45 Gew.-% eines Copolymerisates aus 30 bis 55 Gew.-% ungesättigten Fettsäuren, 10 bis 25 Gew.-% Methacrylsäure und 30 bis 60 Gew.-% Vinyl- oder Vinylidenverbindungen, welche neben der Doppelbindung keine andern funktionellen Gruppen besitzen, mit 5 bis 15, vorzugsweise 8 bis 12 Gew.-% Polyethylenglykol (PEG) mit einem Molekulargewicht zwischen 1000 und 3000 und 35 bis 70, vorzugweise 40 bis 65 Gew.-% von für die Herstellung von Alkydharzen üblichen Polyolen, Monocarbonsäuren und Dicarbonsäuren zu einem acrylmodifizierten Alkydharz mit einer Säurezahl von 40 bis 70 mg KOH/g und einer Grenzviskositätszahl

$$[\eta]_{CHCl_3}$$

von 5 bis 8 ml/g umsetzt,wobei sich die Prozentzahlen auf die im Umsetzungsprodukt enthaltenen Anteile beziehen und in Summe 100 ergeben, und

(II) 30 bis 50 Gew.-% dieser Komponente mit 50 bis 70 Gew.-% eines Alkydharzes mit einem Gehalt an trocknenden Fettsäuren von 15 bis 50 %, einer Säurezahl von weniger als 5 mg KOH/g, einer Hydroxylzahl von 50 bis 150 mg KOH/g und einer Grenzviskositätszahl

$$[\eta]_{CHCl_3,\ 20^\circ C}$$

von 8 bis 13 ml/g bei 160 bis 200 °C vorzugsweise unter Verwendung eines azetropen Schleppmittels

partiell verestert, bis eine Säurezahl von 10 bis 25 mg KOH/g und eine Grenzviskositätszahl

$$[\eta]_{CHCl_3,\ 20^\circ C}$$

von 10 bis 16 ml/g erreicht ist, und

(III) die so erhaltene Alkydharzkombination, welche einen PEG-Gehalt von 3 bis 6 % aufweist, unter Neutralisation der Säuregruppen mit anorganischen oder organischen Basen, vorzugsweise Ammoniak, oder organischen Aminen und unter Zusatz von maximal 20 Gew.-% an organischen Hilfslösungsmitteln, in Wasser emulgiert.

Die in Stufe (I) hergestellten acrylmodifizierten Alkydharze weisen einen PEG-Gehalt von 5 bis 15, vorzugsweise 8 bis 12 % auf, wobei die eingesetzten Polyethylenglykole ein Molekulargewicht von 1000 bis 3000 aufweisen.

Der Einbau der PEG kann in verschiedener Weise erfolgen, beispielsweise durch direkte Veresterung oder durch Verätherung mit Epoxyfettsäureestern und nachfolgende Umesterung, wie es in die AT-PS Nr. 365215 beschrieben wird. Eine weitere Methode wird in der AT-PS Nr. 365216 beschrieben, wobei das PEG mittels Phenolresolen eingebaut wird.

Zur Einführung der zur Stabilisierung der Emulsionen notwendigen Carboxylgruppen werden gemäß der Erfindung Polymerisate herangezogen, welche durch radikalische Polymerisation von 10 bis 25 Gew.-% Methacrylsäure, 30 bis 55 Gew.-% einer trocknenden Ölfettsäure mit einer Jodzahl von mindestens 125 und 30 bis 60 Gew.-% einer oder mehrerer Vinyl-und/oder Vinylidenverbindungen, insbesondere Acrylverbindungen, welche außer der Doppelbindung keine reaktionsfähigen Gruppen enthalten, hergestellt werden.

Als trocknende Fettsäure werden solche mit konjugierten Doppelbindungen - wie dehydratisierte Rizinusölfettsäuren oder isomerisierte Fettsäuren - oder solche mit isolierten Doppelbindungen - wie techn. Soja-, Safflor-oder Leinölfettsäure - eingesetzt. Da isoliert ungesättigte Fettsäuren eine geringere Reaktionsfähigkeit besitzen, müssen sie in größerem Überschuß eingesetzt werden. Sofern bei der Polymerisation die Fettsäure nicht vollständig reagiert, wird der Rest bei der Veresterung in das Alkydharz eingebaut.

Als Vinyl- bzw. Vinylidenverbindungen können Styrol, Vinyltoluol, Vinylester der Essigsäure, der Propionsäure oder der Versaticsäure verwendet werden. Bevorzugt werden die handelsüblichen Alkylester der Acryl- und Methacrylsäure eingesetzt. Die Auswahl richtet sich unter anderem nach der Verträglichkeit mit dem Alkydharzvorprodukt. In der Regel besitzen die Polymerisate mit der besten Verträglichkeit auch die beste Emulgatorwirkung.

Die Polymerisation wird bei 80 bis 160 °C durchgeführt. Als Initiatoren kommen alle Radikalbildner, welche in diesem Temperaturbereich zerfallen, in Frage. Zur Begrenzung des Molekulargewichtes können die üblichen Polymerisationsregler, wie tert. Dodecylmerkaptan, verwendet werden. Zur Herstellung der Copolymerisate wird der Hauptteil der Fettsäuren, gegebenenfalls in Mischung mit inerten Lösungsmitteln, im Reaktionsgefäß vorgelegt. Nach Erreichen der Reaktionstemperatur werden die restlichen Fettsäuren, die Monomeren, sowie das Peroxyd, und gegebenenfalls der Regler, als Mischung im Verlauf von 3 bis 10 h, abhängig von der Reaktivität der Fettsäuren, gleichmäßig zugegeben. Als Endprodukt der Polymerisation wird das Konstantwerden des Trockenrückstandes, d. h. das weitgehende Verschwinden der flüchtigen Monomeren aus dem Reaktionsgemisch angenommen. Die Grenzviskositätszahl der Polymerisate bzw. der Mischung der Polymerisate mit nicht umgesetzten Fettsäuren liegt zwischen 4 und 9 ml/g, gemessen in Dimethylformamid bei 20 °C. Unter den angegebenen Bedingungen werden Nebenreaktionen , wie die Fettsäuredimerisierung, weitgehend unterdrückt. Daher bleiben die nicht einpolymerisierten Fettsäuren unverändert und behalten nach Einbau in das Alkydharz ihre Fähigkeit zur oxydativen Vernetzung.

Neben dem PEG und dem Copolymerisat enthalten die in Stufe (I) hergestellten acrylmodifizierten Alkydharze die üblichen Rohstoffe. Als Polyole werden bevorzugt Pentaerythrit, sowie Trimethylolpropan, Glycerin, Sorbit, sowie gegebenenfalls anteilig Diole eingesetzt. Die verwendeten Fettsäuren weisen Jodzahlen von über 125 auf. Neben den üblichen Dicarbonsäuren, wie den verschiedenen Phthalsäuren, können auch Monocarbonsäuren, wie Benzoesäure oder p-tert.-Butylbenzoesäure, eingesetzt werden.

Die in Stufe (I) hergestellten modifizierten Alkydharze weisen einen Fettsäuregehalt von 20 bis 60 % auf. Die Veresterung der Komponenten wird unter den üblichen Bedingungen bis zu einer Säurezahl von 40 bis 70 mg KOH/g und einer Grenzviskositätszahl

$$[\eta]_{CHCl_3}\ 20^\circ C$$

von 5 bis 8 ml/g geführt.

In der Stufe (II) werden 30 bis 50 Gew.-% des acryl- bzw. PEG-modifizierten Alkydharzes mit 50 bis 70 Gew.-% eines in üblicher Weise hergestellten Alkydharzes partiell verestert. Die eingesetzten PEG-freien Alkydharze weisen folgende Kennzahlen auf:

Gehalt an ungesättigten Fettsäuren: (Jodzahl über 125) 15 bis 50 %
Säurezahl: unter 5 mg KOH/g (vorzugsweise unter 3 mg KOH/g)
Hydroxylzahl: 50 bis 150 mg KOH/g
Grenzviskositätszahl

$$[\eta]_{CHCl_3\ 20^\circ C}:$$

8 bis 13 ml/g

Die beiden Komponenten werden in der Stufe (II) in solchen Mengenverhältnissen kombiniert, daß der PEG-Gehalt bei 3 bis 6 % liegt. Die Säurezahl des Produktes resultiert aus dem Methacrylsäureanteil, welcher im Endprodukt 1,5 bis 4,5 % beträgt. Die beiden Komponenten werden bei 160 bis 200 °C partiell verestert, wobei das Reaktionswasser durch ein Schleppmittel azeotrop entfernt wird. Vor Erreichen der Endwerte wird das Schleppmittel durch Anlegen eines Vakuums entfernt. Die partielle Veresterung wird bis zu einer Säurezahl von 10 bis 25 mg KOH/g und einer Grenzviskositätszahl

$$[\eta]_{CHCl_3\ 20^\circ C}$$

von 10 bis 16 ml/g geführt. Bevorzugt werden Bereiche von 12 bis 20 mg KOH/g für die Säurezahl und 12 bis 15 ml/g für die Grenzviskosität angestrebt.

Die Harze werden in Stufe (III) mit maximal 20 Gew.-%, bevorzugt 5 bis 15 Gew.-% organischen Hilfslösungsmitteln angelöst und in Wasser, welches zur 50- bis 100 %igen Neutralisation der Säuregruppen des Harzes die entsprechende Menge an Ammoniak, organischen Aminen oder Alkalihydroxyden enthält, bie Temperaturen zwischen 40 und 80 °C emulgiert. Als Hilfslösungsmittel sind vor allem Alkohole oder Ätheralkohole, wie n-Butanol oder Äthylenglykolmonobutyläther, geeignet. Als Amine werden z. B. Triäthylamin oder Dimethyläthanolamin verwendet.

Die erfindungsgemäß verwendete Emulsion enthält bevorzugt einen Wassergehalt von 85 bis 145 Gew.-%, bezogen auf den Gesamt-Festkörpergehalt (Bindemittel plus ggf. Pigmente und andere Additive mit Ausnahme des Treibmittels).

Den Emulsionen können übliche Pigmente anorganischer oder organischer Natur sowie andere Additive zugesetzt werden, die für Aerosol-Sprühzwecke geeignet sind. Solche Pigmente und Additive werden im allgemeinen in Mengen von 2,0 bis 22 Gew.-%, bezogen auf die wäßrige Emulsion, zugesetzt.

Zur Sikkativierung werden die üblichen Trockenstoffe in üblichen Mengen zugesetzt.

Andere mögliche Additive sind oberflächenaktive Mittel, Stabilisatoren, Antischaummittel, Weichmacher und übliche Zusätze, wie sie für Anstrichmittel auf Wasserbasis verwendet werden.

Die erfindungsgemäß eingesetzten wäßrigen Emulsionen, die wie vorstehend beschrieben hergestellt werden können, können mit üblichen Treibmitteln für Aerosolzusammensetzungen für den Aerosol-Sprühauftrag formuliert werden.

Beispiele für Treibmittel sind Kohlendioxid und Dimethylether. Besonders bevorzugt als Treibmittel ist Dimethylether.

Die Treibmittel und insbesondere Dimethylether werden in Mengen von 90 bis 120 Gew.-%, bevorzugt 100 Gew.-% bezogen auf die Hilfslösemittel und übrige Additive (wie Pigmente etc.) enthaltende wäßrige Emulsion verwendet.

Die erfindungsgemäß eingesetzte wäßrige Emulsion wird zusammen mit den Additiven in einen Druckbehälter eingebracht und mit dem Treibmittel versetzt. Es hat sich gezeigt, daß schäumungsstabile koagulationsfreie Zusammensetzungen erhalten werden, die zu kontinuierlichen Filmen versprüht werden können.

Die folgenden Beispiele erläutern die erfindungsgemäße Verwendung. Alle angegebenen Teile sind Gewichtsteile. Die angegebenen Grenzviskositätszahlen wurden, wenn nicht anders angegeben, in Chloroform bei 20 °C bestimmt.

(I) Herstellung der Copolymerisate

Copolymerisat P 1:

In einem geeigneten, mit Rückflußkühler und Zugabeeinrichtung ausgestattenen Reaktionsgefäß werden 40 Teile Xylol, 40 Teile Isopropanol, 60 Teile Leinölfettsäure, 11 Teile Isobutylmethacrylat, 1 Teil Äthylhexylacrylat, 2 Teile Vinyltoluol, 6 Teile Methacrylsäure sowie 3 Teile Dibenzoylperoxyd und 0,2 Teile Dodecylmerkaptan auf Rückflußtemperatur (zirka 95° C) erwärmt und bei dieser Temperatur gleichzeitig eine Mischung aus 44 Teilen Isobutylmethacrylat, 4 Teilen Äthylhexylacrylat, 8 Teilen Vinyltoluol, 24 Teilen Methacrylsäure und 0,8 Teilen Dodecylmerkaptan und eine Mischung aus 10 Teilen Xylol, 10 Teilen Methyläthylketon, 40 Teilen Leinölfettsäure und 11 Teilen Dibenzoylperoxyd innerhalb von 5 h gleichmäßig zugegeben. Anschließend wird bei Rückflußtemperatur bis zum praktisch vollständigen Umsatz (Bestimmung des Festkörpergehaltes) polymerisiert. Wenn erforderlich, kann während dieser Zeit ein Viertel der angegebenen Peroxydmenge zusätzlich zugegeben werden.

Das Copolymerisat weist einen Fettsäuregehalt (bezogen auf 100 %iges Harz) von 50 %, einen Methacrylsäuregehalt von 15 %, einen Festkörpergehalt von 65,5 % und eine Grenzviskositätszahl$[\eta]_{DMF,}$ 20° C von 4,6 ml/g auf.

Copolymerisat P 2:

50 Teile entwässerte Leinölfettsäure werden auf 145° C erhitzt und innerhalb von 6 h eine Mischung aus 55 Teilen Isobutylmethacrylat, 35 Teilen Methacrylsäure und 10 Teilen Vinyltoluol, sowie gleichzeitig eine Mischung aus 20 Teilen entwässerter Leinölfettsäure und 6 Teilen tert.Butylperbenzoat gleichmäßig zugegeben.Zur Vervollständigung der Polymerisation wird der Ansatz weitere 8 h auf 145° C gehalten, wobei im Abstand von jeweils 2 h dreimal eine Mischung aus je 5 Teilen Xylol und 0,5 Teilen tert.Butylperbenzoat zugesetzt wird.

Das Copolymerisat hat einen Fettsäuregehalt von 41,2 % einen Methacrylsäuregehalt von 20,6 % einen Festkörpergehalt von 90,3 % und eine Grenzviskositätszahl$[\eta]_{DMF,}$ 20° C von 4,7 ml/g. (DMF = Dimethylformamid)

(II) Herstellung der acrylmodifizierten Alkydharze

Modifiziertes Alkydharz PA 1:

100 Teile p-tert.Butylbenzoesäure, 20 Teile Benzoesäure, 160 Teile Leinölfettsäure und 141 Teile Pentaerythrit werden auf 250° C erhitzt und 90 Min. bei dieser Temperatur gehalten. Anschließend werden bei 220° C 120 Teile konjugierte technische Linolfettsäure, 100 Teile PEG 1500, 64 Teile Phthalsäureanhydrid, 30 Teile Tetrahydrophthalsäureananhydrid und 376 Teile des Polymerisates P2/90, 3 %ig, zugesetzt. Der Ansatz wird in Gegenwart von Xylol als Schleppmittel bei 180° C verestert, bis eine Säurezahl von 54 mg KOH/g und eine Grenzviskositätszahl

$$[\eta]_{CHCl_3\ 20^\circ C}$$

von 6,8 ml/g erreicht ist. Das Harz weist einen Festkörpergehalt von 92 %, einen PEG-Gehalt von 9,8 % und einen Polymergehalt von 33 % auf.

Modifiziertes Alkydharz PA 2:

200 Teile Leinöl, 130 Teile p-tert.Butylbenzoesäure, 91 Teile Pentaerythrit und 20 Teile Trimethylolpropan werden auf 250° C erhitzt und 2 h bei dieser Temperatur gehalten. Bei 140° C werden 715 Teile Polymerisat P1/65 %ig zugegeben und die Temperatur wieder auf 180° C gesteigert. Dabei wird das vorhandene Lösungsmittel unter Vakuum möglichst vollständig entfernt. Dann werden 100 Teile PEG 1500

und 92 Teile Phthalsäureanhydrid zugegeben und der Ansatz in Gegenwart von Xylol als Schleppmittel bis zu einer Säurezahl von 52 mg KOH/g und einer Grenzviskositätszahl

$$[\eta]_{CHCl_3,\ 20^\circ C}$$

von 7,1 ml/g verestert. Der Festkörpergehalt des Harzes beträgt 92 %, der PEG-Gehalt 9,5 % und der Polymerisatanteil 44 %.

(III) Alkydharze mit niederer Säurezahl

Die in der Tabelle angegebenen Rohstoffe werden in bekannter Weise bei 240 °C in Gegenwart von Xylol als Schleppmittel verestert. Bei A3 wird zuerst das Leinöl mit dem Pentaerythrit und der p-tert.Butylbenzoesäure 90 Min. bei 250 °C umgeestert. Nach Zugabe der Dicarbonsäureanhydride bei zirka 200 °C erfolgt die Veresterung bei 240 °C. Alle Harze werden mit Butylglykol auf 80 % Festkörpergehalt verdünnt.

Tabelle

| Alkydharz | A 1 | A 2 | A 3 | A 4 | A 5 |
|---|---|---|---|---|---|
| Pentaerythrit | 110 | 110 | 93 | 110 | 110 |
| p-tert.Butylbenzoesäure | 140 | 120 | 120 | 90 | 130 |
| Leinöl | - | - | 110 | - | - |
| Holzöl | - | - | - | - | 110 |
| Leinölfettsäure | 40 | 60 | - | 100 | - |
| Tallölfettsäure | - | - | - | - | 105 |
| dehydratisierte Rizinusölfettsäure | 45 | 45 | - | - | - |
| technische konjugierte Linolfettsäure | - | - | - | 50 | - |
| Phthalsäureanhydrid | 90 | 60 | 62 | 110 | 100 |
| Tetrahydrophthalsäureanhydrid | 20 | 42 | 45 | - | - |
| Fettsäuregehalt, % | 20,6 | 25,9 | 25,9 | 35,0 | 40,0 |
| Säurezahl (mg KOH/g) | 1,5 | 1,9 | 2,9 | 1,4 | 1,4 |
| Hydroxylzahl (mg KOH/g) | 95 | 115 | 90 | 95 | 85 |
| $[\eta]CHCl_3$, 20 °C (ml/g) | 10,8 | 10,3 | 11,5 | 10,6 | 11,2 |

Beispiele:

Beispiel 1:

68,75 Teile A1 und 48,9 Teile PA1 (Festharzverhältnis 55 : 45) werden bei 180 °C in Gegenwart von Xylol als Schleppmittel bis zum Erreichen einer Grenzviskositätszahl$[\eta]$von zirka 11 ml/g und einer Säurezahl von zirka 20 mg KOH/g verestert. Nach Entfernung des Xylols unter Vakuum wird der Ansatz weiter bei 180 °C gehalten. Bei Erreichen der unten genannten Kennzahlen wird jeweils ein Muster entnommen und mit Monoäthylenglykolmonobutyläther (BUGL) auf einen Festkörpergehalt von 85 % verdünnt. Die Lösungen werden entsprechend ihrer Säurezahl mit Triäthylamin (TEA) versetzt und mit deionisiertem Wasser auf einen Festkörpergehalt von 40 % verdünnt. In allen Fällen entstehen milchigopake,strukturviskose Emulsionen, welche einen pH-Wert von 9,2 bis 9,4 aufweisen.

| Muster | 1 | 2 | 3 |
|---|---|---|---|
| Säurezahl | 17,8 | 17,5 | 17,3 |
| $[\eta]$ | 12,7 | 13,8 | 15,3 |

Zur Prüfung der Stabilität werden die Emulsionen 3 Monate bei 40 ° C gelagert. Nach dieser Beanspruchung weisen die Emulsionen, außer einer geringen Abnahme der Viskosität, keine Veränderungen auf.

Zur Prüfung der Lackeigenschaften werden die Emulsionen im Verhältnis 1 : 1 mit $TiO_2$ (Rutil) pigmentiert, mit 3 % eines wasserverträglichen Sikkativgemisches (1,2 % Cobalt, 7,2 % Barium, 3,2 % Zink), 1 % eines Antihautmittels und 0,5 % eines Verlaufmittels versetzt und mit deionisiertem Wasser auf Applikationsviskosität verdünnt.

90 Teile der wäßrigen vorstehenden wäßrigen Lackemulsion wurden mit 10 Teilen Wasser versetzt und in einem Aerosol-Druckbehälter mit Dimethylether auf einen Druck von 4 bis 5 bar bei 20 ° C gebracht.

Man erhielt eine gut versprühbare Aerosolanstrichmittelzusammensetzung, die zu einem kontinuierlichen Film versprühbar war.

Beispiel 2:

In analoger Weise wie im Beispiel 1 werden 75 Teile A2 mit 43,5 Teilen PA1 (Feststoffverhältnis 60 : 40) umgesetzt. Es resultiert ein Bindemittel, welches eine Säurezahl von 16,9 mg KOH/g und ein$[\eta]$von 13,9 ml/g aufweist. Das Harz wird wie im Beispiel 1 angegeben, in Wasser emulgiert und mit Diethylether zu einer Aerosolanstrichmittelzusammensetzung formuliert.

Beispiel 3:

43 Teile eines wie in Beispiel 1 hergestellten wäßrigen Lacks aus 68,5 Teilen des im Beispiel 1 hergestellten Bindemittels (40 % in Wasser/Butylglykol, 7 : 1)
20 Teilen Titandioxid
5,7 Teilen Wasser
2,5 Teilen Butylglykol
0,5 Teilen sec-Butanol
0,3 Teilen Triethylamin
0,3 Teilen Verlaufsmittel
0,5 Teilen Netz- und Dispergiermittel
0,7 Teilen Hautverhinderungsmittel und
1,0 Teilen Trockenstoffmischung
wurden mit 40 Teilen Wasser und mit 7 Teilen Butylglykol versetzt.

90 Teile der erhaltenen wäßrigen Emulsion wurden erneut mit 10 Teilen Wasser verdünnt und in einem Aerosol-Druckbehälter mit 100 Teilen Dimethylether versetzt. Man erhielt einen wäßrigen sprühbaren Lack, der einen kontiniuierlichen Film bildete.

Die nach Beispiel 1, 2 und 3 erhaltenen Filme konnten zu überzügen mit ausgezeichneten mechanischen Eigenschaften getrocknet werden.

**Patentansprüche**

1. Verwendung einer wäßrigen Emulsion oxidativ trocknender polyethylenglykolmodifizierter Alkydharze, die erhältlich ist durch Umsetzung von
   (I) 25 bis 50 Gew.-% eines Copolymerisates aus 30 bis 55 Gew.-% ungesättigten Fettsäuren, 10 bis 25 Gew.-% Methacrylsäure und 30 bis 60 Gew.-% Vinyl- oder Vinylidenverbindungen, welche neben der Doppelbindung keine andern funktionellen Gruppen besitzen, mit 5 bis 15 Gew.-% Polyethylenglykol (PEG) mit einem Molekulargewicht zwischen 1000 und 3000 und 35 bis 70 Gew.-% von für die Herstellung von Alkydharzen üblichen Polyolen, Monocarbonsäuren und Dicarbonsäuren zu einem acrylmodifizierten Alkydharz mit einer Säurezahl von 40 bis 70 mg KOH/g und einer Grenzviskositätszahl

$$[\eta]_{CHCl_3}$$

   von 5 bis 8 ml/g wobei sich die Prozentzahlen auf die im Umsetzungsprodukt enthaltenen Anteile beziehen und in Summe 100 ergeben, und partielles Verestern von

(II) 30 bis 50 Gew.-% der Komponente (I) mit 50 bis 70 Gew.-% eines Alkydharzes mit einem Gehalt an trocknenden Fettsäuren von 15 bis 50 %, einer Säurezahl von weniger als 5 mg KOH/g, einer Hydroxylzahl von 50 bis 1-50 mg KOH/g und einer Grenzviskosität

$$[\eta]_{CHCl_3,\ 20^\circ C}$$

von 8 bis 13 ml/g bei 160 bis 200 ° C, bis eine Säurezahl von 10 bis 25 mg KOH/g und eine Grenzviskosität

$$[\eta]_{CHCl_3,\ 20^\circ C}$$

von 10 bis 16 ml/g erreicht ist, und Emulsionen von

(III) der so erhaltenen Alkydharzkombination, welche einen PEG-Gehalt von 3 bis 6 % aufweist, unter Neutralisation der Säuregruppen mit anorganischen oder organischen Basen, vorzugsweise Ammoniak, oder organischen Aminen und unter Zusatz von maximal 20 Gew.-% an organischen Hilfslösungsmitteln, in Wasser,

als unter Druck stehende Aerosolanstrichzusammensetzungen zur Herstellung kontinuierlicher lufttrocknender Filme.

**2.** Verwendung nach Anspruch 1, dadurch gekennzeichnet, daß die wäßrige Emulsion zusammen mit Dimethylether als Treibmittel verwendet wird.

**3.** Verwendung nach Anspruch 1 oder 2, dadurch gekennzeichnet, daß als organisches Hilfslösemittel in Stufe (III) Butylglykol eingesetzt wird.

## Claims

**1.** Use of an aqueous emulsion of polyethlene glycol modified alkyd resins drying by oxidation and obtainable by reaction of

(I) 25 to 50 wt.% of a copolymer of 30 to 55 wt.% unsaturated fatty acids, 10 to 25 wt.% methacrylic acid and 30 to 60 wt.% vinyl or vinylidene compounds containing no functional groups apart from the double bond, with 5 to 15 wt.% polyethylene glycol (PEG) with a molecular weight between 1000 and 3000 and 35 to 70 wt.% of polyols, monocarboxylic acids and dicarboxylic acids conventionally used for manufacture of alkyd resins to obtain an acryl-modified alkyd resin with an acid number of 40 to 70 mg KOH/g and a limiting viscosity number

$$[\eta]_{CHCl_3}$$

of 5 to 8 ml/g, the percentage numbers relating to the components contained in the reaction product and adding up to 100, and partial esterification of

(II) 30 to 50 wt.% of component (I) with 50 to 70 wt.% of an alkyd resin with a dry fatty acid content of 15 to 50%, an acid number of less than 5 mg KOH/g, a hydroxyl number of 50 to 1-50 mg/KOH/g and a limiting viscosity

$$[\eta]_{CHCl_3,\ 20^\circ C}$$

of 8 to 13 ml/g at 160 to 200 ° C, until an acid number of 10 to 25 mg KOH/g and a limiting viscosity

$$[\eta]_{CHCl_3,\ 20^\circ C}$$

of 10 to 16 ml/g is reached, and emulsions of

(III) the resulting alkyd resin combination which have a PEG content of 3 to 6%, the acid groups being neutralised with inorganic or organic bases, preferably ammonia, or organic amines and with addition of no more than 20 wt.% of organic auxiliary solvents, in water,

as pressurised aerosol paint compositions for production of continuous films drying in air.

2. Use according to claim 1, characterised in that the aqueous emulsion is used together with dimethyl ether as a propellant.

3. Use according to claim 1 or 2, characterised in that the organic auxiliary solvent in step (III) is butyl glycol.

**Revendications**

1. Utilisation d'une émulsion aqueuse de résine alkyde modifiée par du polyéthylèneglycol et séchant à l'air, qui peut être préparée par réaction de

(I) 25 à 50% en poids d'un copolymère de 30 à 55% en poids d'acides gras insaturés, 10 à 25% en poids d'acide méthacrylique et 30 à 60% en poids de composés vinyliques ou vinylidéniques, qui ne possèdent pas d'autres groupes fonctionnels que la double liaison, avec 5 à 15% en poids de polyéthylèneglycol (PEG) ayant une masse moléculaire comprise entre 1000 et 3000 et 35 à 70% en poids de polyols, acides monocarboxyliques et acides dicarboxyliques classiques pour la préparation de résines alkydes, pour donner une résine alkyde à modification acrylique ayant un indice d'acide de 40 à 70 mg de KOH/g et un indice de viscosité limite

$$[\eta]_{CHCl_3}$$

de 5 à 8 ml/g, les pourcentages se rapportant aux fractions contenues dans le produit de réaction, et estérification partielle de

(II) 30 à 50% en poids du constituant (I) avec 50 à 70% en poids d'une résine alkyde ayant une teneur en acides gras siccatifs de 15 à 50%, un indice d'acide de moins de 5 mg de KOH/g, un indice d'hydroxyle de 50 à 150 mg de KOH/g et une viscosité limite

$$[\eta]_{CHCl_3, 20°C}$$

de 8 à 13 ml/g entre 160 et 200 ° C, jusqu'à obtention d'un indice d'acide de 10 à 25 mg de KOH/g et une viscosité limite

$$[\eta]_{CHCl_3, 20°C}$$

de 10 à 16 ml/g, et émulsification de

(III) la combinaison de résines alkydes ainsi obtenue, qui présente une teneur en PEG de 3 à 6%, avec neutralisation des groupes acides avec des bases minérales ou organiques, de préférence l'ammoniac ou des amines organiques, et avec addition d'un maximum de 20% en poids de solvants auxiliaires organiques, dans l'eau,

comme compositions de peinture aérosol sous pression pour la préparation de feuils continus séchant à l'air.

2. Utilisation selon la revendication 1, caractérisée en ce que l'émulsion aqueuse est utilisée conjointement avec de l'éther diméthylique comme agent propulseur.

3. Utilisation selon l'une des revendications 1 ou 2, caractérisée en ce qu'on introduit comme solvant auxiliaire organique dans l'étape (III) du butylglycol.